# EUROPEAN PATENT APPLICATION

(11) **EP 3 253 155 A1**
(43) Date of publication of application: **06.12.2017**
(21) Application number: 16743517.1
(22) Date of filing: 29.01.2016
(51) Int. Cl.: H04W 72/04, H04W 72/12

(54) **USER TERMINAL, WIRELESS BASE STATION, AND WIRELESS COMMUNICATION METHOD**

(30) Priority: 29.01.2015 JP 2015015164
(71) Applicant: NTT DOCOMO, INC., Chiyoda-ku Tokyo 100-6150 (JP)
(72) Inventor: TAKEDA, Kazuki, Tokyo 100-6150 (JP); YASUKAWA, Shimpei, Tokyo 100-6150 (JP); NAGATA, Satoshi, Tokyo 100-6150 (JP)
(74) Representative: Hoffmann Eitle
(86) International application number: PCT/JP2016/052618
(87) International publication number: WO 2016/121914

(57) **Abstract**

The present invention is designed so that communication is carried out adequately even when the number of component carriers that can be configured in the user terminal is increased compared to that of existing systems. According to one aspect of the present invention, a user terminal can communicate by using six or more component carriers (CCs), and has a receiving section that receives predetermined higher layer signaling and a downlink control signal including information about change of UL-DL configuration; and a control section that sets a UL-DL configuration of the CC using the information about the change of UL-DL configuration, wherein, the control section determines a CC to be configured using the information about the change of UL-DL configuration among the six or more CCs based on the predetermined higher layer signaling.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Successor system of LTEreferred to as "LTE-advanced" (also referred to as "LTE-A") -- have been under study for the purpose of achieving further broadbandization and increased speed beyond LTE, and the specifications thereof have been drafted as LTE Rel. 10 to 12.

One of the LTE Rel. 10 to 12 wideband technologies is carrier aggregation (CA: Carrier Aggregation). CA makes it possible to use a plurality of fundamental frequency blocks as one in communication. The fundamental frequency blocks in CA are referred to as "component carriers" (CCs), and are equivalent to the system band in LTE Rel. 8.

Also, LTE Rel. 12 supports eIMTA (enhanced Interference Mitigation and Traffic Adaptation) for the purpose of traffic and interference control. eIMTA is a technology where a radio base station dynamically controls time resources based on the traffic amount of uplink (UL) and downlink (DL) in a time division duplex (TDD) method. For this reason, eIMTA is referred to as "dynamic TDD."

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

In CA in successor systems of LTE (LTE Rel. 10 to 12), the number of CCs that can be configured per user terminal (UE) is limited to maximum five. Meanwhile, in more advanced successor systems of LTE, such as LTE Rel. 13 and later versions, in order to realize more flexible and faster wireless communication, studies are in progress to soften the limit on the number of CCs that can be configured per user terminal, and configure six or more CCs (greater than five CCs). Meanwhile, in more advanced successor systems of LTE, such as LTE Rel. 13 and later versions, a study is in progress to soften the limit on the number of CCs that can be configured per user terminal, and use enhanced carrier aggregation (CA enhancement), in which six or more CCs (cells) are configured. Here, carrier aggregation where the number of CCs that can be configured is six or more may be referred to as, for example, "enhanced CA."

However, it is difficult to directly apply the eIMTA control method to existing systems (Rel. 10 to 12) when the number of CCs that can be configured in a user terminal is increased to six or more (for example, 32 CCs). For example, in existing systems, a network (for example, a radio base station) reports signals to dynamically change the UL-DL configuration of each CC to the user terminal. Since these signals presume five or less CCs, there is a threat that communication is not carried out adequately in the application of CA using six or more CCs.

The present invention has been made in view of the above, and it is therefore an object of the present invention to provide a user terminal and a radio base station that enable adequate communication even when the number of component carriers that can be configured in a user terminal is expanded from that of existing systems.

### Solution to Problem

According to one aspect of the present invention, a user terminal can communicate by using six or more component carriers (CCs), and has a receiving section that receives predetermined higher layer signaling and a downlink control signal including information about the change of UL-DL configuration, and a control section that sets the UL-DL configuration of the CC using the information about the change of UL-DL configuration, where the control section determines a CC to be configured using information about the change of UL-DL configuration among six or more CCs based on the predetermined higher layer signaling.

### Advantageous Effects of Invention

According to the present invention, communication can be carried out adequately even when the number of component carriers that can be configured in a user terminal is expanded from that of existing systems.

### Brief Description of Drawings

FIGs. 1 provide diagrams to explain an overview of carrier aggregation in successor systems of LTE;
FIG. 2 is a diagram to show an example of carrier aggregation studied in LTE Rel. 13;
FIG. 3 is a diagram to show an example of a UL-DL configuration of TDD available for eIMTA;
FIG. 4 is a diagram to show an example of DCI format 1C masked by eIMTA-RNTI;
FIG. 5 is a diagram to show an example of dynamic change signaling according to a second embodiment;
FIG. 6 is a diagram to show an example of limited UL-DL configuration and DCI format 1C according to a fourth embodiment;
FIG. 7 is a diagram to show an example of a schematic structure of a radio communication system according to an embodiment of the present invention;
FIG. 8 is a diagram to show an example of an overall structure of a radio base station according to an embodiment of the present invention;
FIG. 9 is a diagram to show an example of a functional structure of a radio base station according to an embodiment of the present invention;
FIG. 10 is a diagram to show an example of an overall structure of a user terminal according to an embodiment of the present invention; and
FIG. 11 is a diagram to show an example of a functional structure of a user terminal according to an embodiment of the present invention.

### Description of Embodiments

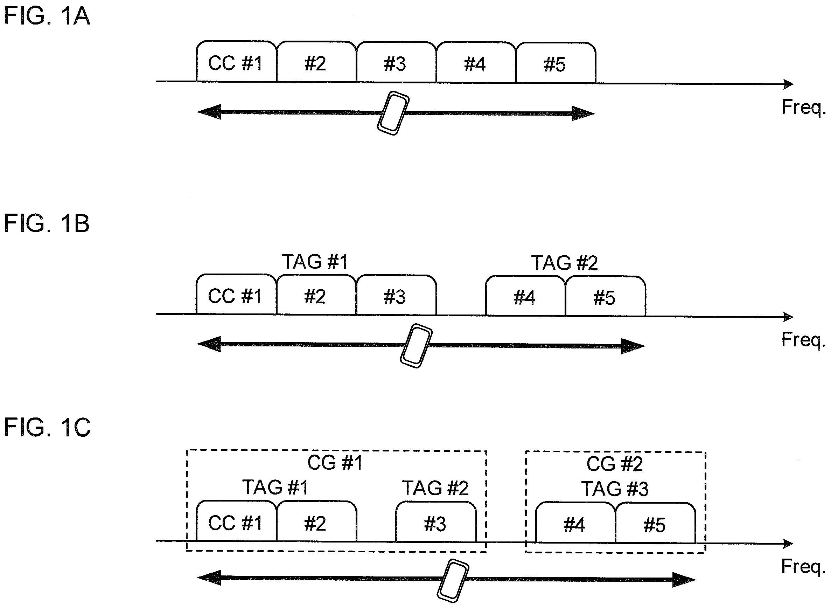

FIGs. 1 provide diagrams to explain an overview of carrier aggregation in successor systems of LTE (LTE Rel. 10 to 12). FIG. 1A shows the outline of CA (carrier aggregation) in LTE Rel. 10. FIG. 1B shows an overview of CA in LTE Rel. 11. FIG. 1C shows the outline of dual connectivity (DC) in LTE Rel. 12.

As shown in FIG. 1A, in CA in LTE Rel. 10, high speed data rates are made possible by providing a wide band by bundling maximum five component carrier (CCs) (CC #1 to CC #5), where the LTE system band constitutes one unit.

Also, as shown in FIG. 1B, in CA in LTE Rel. 11, multiple timing advance (MTA), which enables varying timing control between CCs, is introduced. CA that employs MTA provides support for timing advance groups (TAGs), which are classified by the timing of transmission. Then, one radio base station's scheduler controls signal transmission timings on a per TAG basis. By this means, CA with a plurality of non-co-located CCs with small delay is realized, such as a radio base station and an RRH (Remote Radio Head) connected to the radio base station by ideal backhaul such as optical fiber.

In LTE Rel. 12, dual connectivity (DC), which bundles cell groups (CGs) formed by a plurality of radio base stations that are connected by non-ideal backhaul that produces delay that cannot be ignored, was introduced, and more flexible arrangement was realized (see FIG. 1C). In DC, it is assumed that scheduling is performed independently among the schedulers provided in a plurality of radio base stations.

In DC, a plurality of CGs are configured in the user terminal, and scheduling or retransmission control (HARQ control) is independently performed between the CGs. By this means, CCs belonging to each CG are formed by radio base stations, which are located at different positions and carry out independent scheduling, and CA using these CCs is realized. Also, DC also supports MTA in the configured CGs.

In CA in these successor systems of LTE (LTE Rel. 10 to 12), the maximum number of CCs that can be configured per user terminal is limited to five. Meanwhile, in more advanced successor systems of LTE such as LTE Rel. 13 and later versions, a study is in progress to soften the limit on the number of CCs that can be configured per user terminal, and to use enhanced carrier aggregation (referred to as "CA enhancement," "enhanced CA," etc.), in which six or more CCs (cells) are configured.

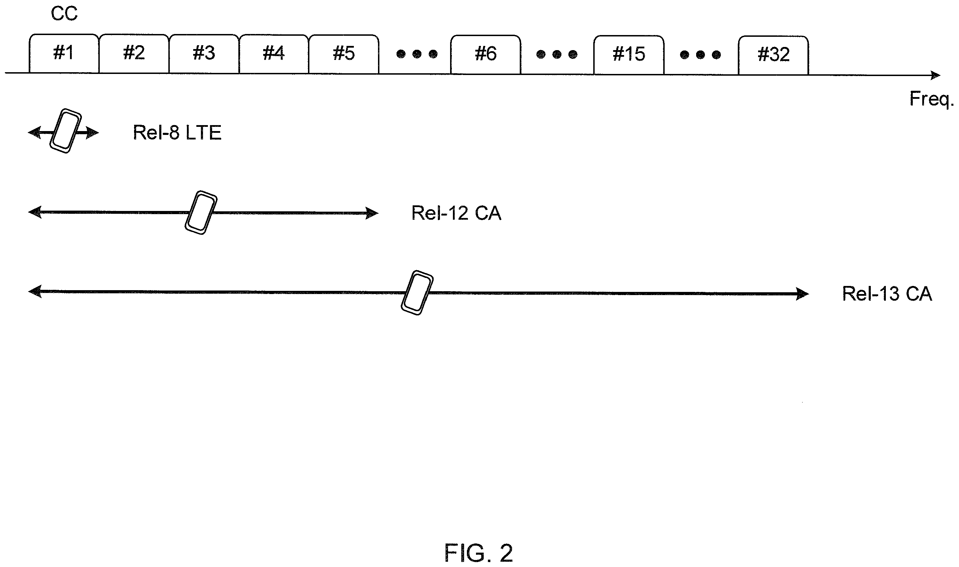

FIG. 2 is a diagram to show an example of carrier aggregation studied in LTE Rel. 13. In enhanced CA, for example, as shown in FIG. 2, it is assumed that 32 component carriers are bundled together. In this case, it is possible to communicate using a bandwidth of maximum 640 MHz (20 MHz × 32) between the radio base station and the user terminal. By employing enhanced CA, more flexible and high speed wireless communication can be realized.

Now, LTE Rel. 12 supports eIMTA for the purpose of traffic and interference control. eIMTA is a technology of dynamically controlling time resources in a time division duplex (TDD) method, and is also referred to as "dynamic TDD."
Hereinafter, an eIMTA control method in LTE Rel. 12 will be outlined.

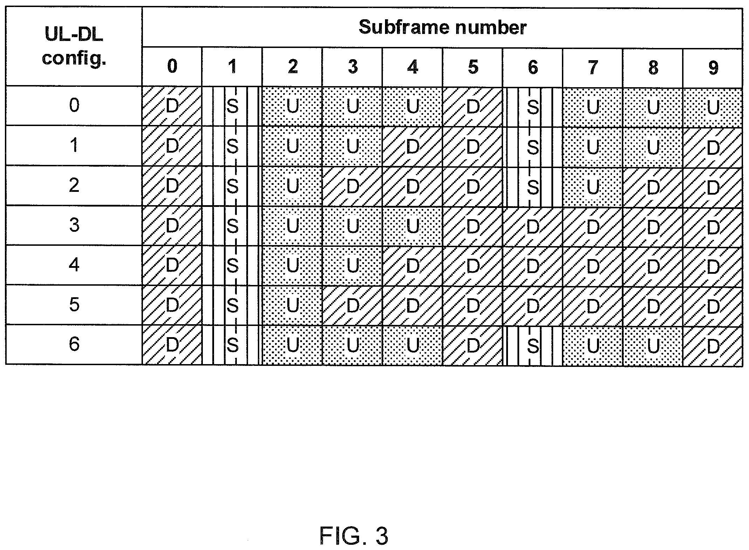

In eIMTA, by dynamically changing a UL-DL configuration of TDD (UL-DL config.) per cell, it is possible to reduce inter-cell interference. FIG. 3 is a diagram to show an example of a UL-DL configuration of TDD available for eIMTA. In FIG. 3, "D" denotes a DL subframe, "U" denotes a UL subframe, and "S" denotes a special subframe. In eIMTA, for example, frame structures having different ratio of UL/DL subframe (UL-DL configurations 0 to 6) as shown in FIG. 3 are available. Note that, the UL-DL configuration may be referred to as a "UL/DL configuration."

In a user terminal, a UL/DL ratio of TDD cells to which eIMTA is applied is dynamically configured (or reconfigured, updated) by a PDCCH (Physical Downlink Control Channel). For example, the radio base station dynamically signals, to the user terminal, the number of UL-DL configuration to be used (for example, 0 to 6) using a PDCCH according to the TDD UL-DL configuration in FIG. 2. In the case of CA, the UL/DL ratio can be independently changed per cell (CC) of different carrier.

TDD UL/DL ratio dynamic change signaling for eIMTA (also referred to as dynamic change signaling, eIMTA signaling, reconfiguration signaling, signals including information about the change of UL-DL configuration, and so on) is reported using DCI (Downlink Control Information) format 1C in a common search space (CSS) of the PDCCH. That is, dynamic change signaling is reported by downlink control signals (PDCCH) including downlink control information (DCI).

Before dynamic change signaling, the radio base station (eNB: evolved Node B) reports information to receive dynamic change signaling for specific serving cells to the user terminal (UE: User Equipment) through RRC (Radio Resource Control) signaling. For example, the radio base station reports eIMTA-RNTI (eimta-RNTI field) as an identifier to detect dynamic change signaling. Also, the radio base station reports transmission subframes (eimta-Command Subframe Set field) and cycle (eimta-Command Periodicity field) of DCI format 1C masked by eIMTA-RNTI. Also, the radio base station reports information about bits to indicate dynamic changing in DCI format 1C (eimta-ReConfig Index field).

The user terminal performs blind decoding on the PDCCH using DCI format 1C in subframes indicated by the RRC signaling and checks whether or not the decoding results are masked by eIMTA-RNTI. Then, when the user terminal detects DCI format 1C masked by eIMTA-RNTI, the user terminal reads a predetermined number of bit sequence (three-bit sequence) indicated by RRC signaling, and determines which of UL-DL configurations 0 to 6 has been specified.

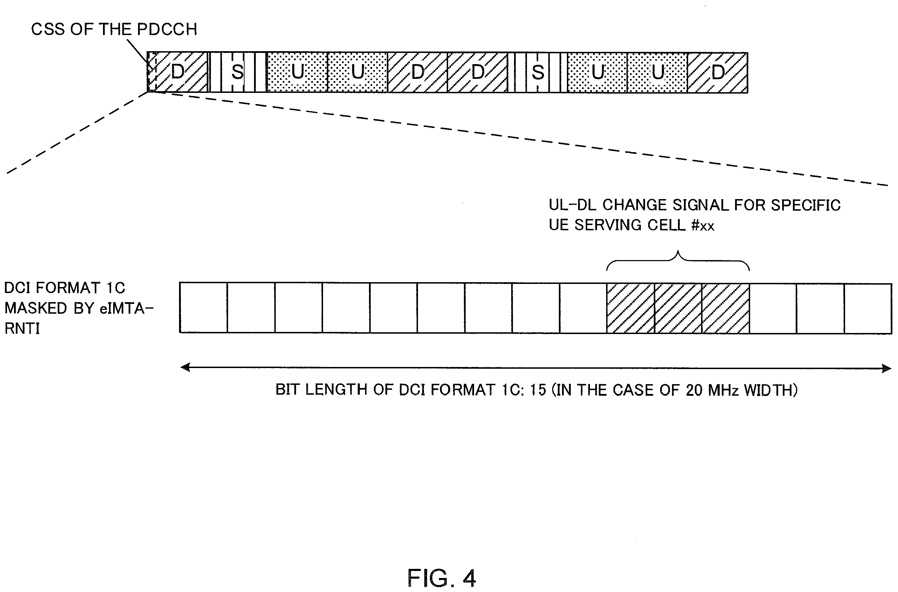

FIG. 4 is a diagram to show an example of DCI format 1C masked by eIMTA-RNTI. FIG. 4 shows the frame structure of UL-DL configuration 1 in UL-DL configurations shown in FIG. 3, and DCI format 1C is transmitted in DL subframe of subframe number 0.

UL-DL change signaling is segmented every three bits in DCI format 1C. For example, the part of diagonal lines in FIG. 4 shows UL-DL change signaling for specific UE serving cell #xx.

In LTE Rel. 12, a three bit sequence of dynamic change signaling can be configured per serving cell, and the dynamic change of UL-DL configuration is possible for up to five CCs independently using the payload size for DCI format 1C (maximum 15 bits) transmitted in a common search space.

However, in the above-described eIMTA control method in LTE Rel. 12, since dynamic change can be carried out for maximum five CCs, the method cannot support six or more CCs. Accordingly, communication cannot be performed adequately when enhanced CA and eIMTA are simultaneously employed.

Therefore, the present inventors have come up with the idea of introducing a novel control method for the purpose of enabling dynamic change of UL-DL configuration for six or more CCs (for example, 32 CCs) in LTE Rel. 13 and later versions. To be more specific, the present inventors have come up with the idea of reporting additional information to the UE, and thereby supporting six or more CCs while using the same DCI format as the DCI format in existing framework. Also, the present inventors have come up with the idea of transmitting dynamic change signaling to correspond to six or more CCs using a new format with a large capacity. The present inventors arrived at the present invention based on these ideas.

Now, embodiments of the present invention will be described below. In the embodiments of the present invention, information that is not used for eIMTA control in LTE Rel. 12 is reported to the user terminal through higher layer signaling for the purpose of dynamic change signaling of UL-DL configuration. Hereinafter, although the following description will assume that the information is reported through RRC signaling, but is by no means limited to this. For example, the information may be reported by MAC (Medium Access Control) signaling (for example, MAC control element (CE)), broadcast signals (MIB (Master Information Block), SIB (System Information Block)) and so on.

### (First Embodiment)

According to a first embodiment of the present invention, a plurality of identifiers (eIMTA-RNTI) for detecting dynamic change signaling are configured in the user terminal. By this means, the user terminal can determine DCI format 1C masked by corresponding eIMTA-RNTI per serving cell, and dynamically configure a UL-DL configuration with a predetermined number of bit sequence (for example, three-bit sequence) included the DCI format 1C.

The eNB configures a plurality of eIMTA-RNTIs to the UE by RRC signaling. Here, one eIMTA-RNTI may be used to mask a plurality of CCs and, for example, UL-DL change signaling for CCs belonging to one CG may be masked by the same eIMTA-RNTI. For example, a configuration in which eIMTA-RNTI 1 is configured for CC #0 to 4, and eIMTA-RNTI 2 is configure for CC #5 to 9 may be possible. Note that, a plurality of eIMTA-RNTIs may be configured by single RRC signaling or configured by multiple times of RRC signaling.

When a plurality of eIMTA-RNTIs are configured, the UE checks whether or not there is dynamic TDD control, using each of the eIMTA-RNTIs at the time of performing blind decoding on DCI format 1C. Here, the UE may detect a plurality of eIMTA-RNTIs in one subframe.

Note that, information about the association of eIMTA-RNTI and CC may be defined in advance or may be reported through higher layer signaling (for example, RRC signaling). For example, RRC signaling may include offset information for a cell index that corresponds to the eIMTA-RNTI. When the cell index offset is x, the UE may use, as a cell index corresponding to a predetermined eIMTA-RNTI, a value (for example, 0 + x to 4 + x) obtained by adding x to the cell index defined by information for receiving conventional dynamic change signaling (for example, 0 to 4).

As described above, according to the first embodiment, the number of eIMTA-RNTIs that can be configured can be increased without changing the configuration of conventional dynamic signaling. Such a configuration allows the user terminal to dynamically configure the UL-DL configuration for six or more CCs without increasing the number of bits of eIMTA signaling. Also, since DCI format 1C, which is masked by different eIMTA-RNTIs has the same sequence length, the user terminal can check whether or not DCI format 1C with a predetermined bit sequence length, that the user terminal tried blind decoding once, is masked by a plurality of eIMTA-RNTIs. In other words, the user terminal can detect a plurality of UL/DL ratio dynamic change signaling without increasing the number of times of blind decoding that the user terminal attempts. This leads to suppression of the increase in processing load on the user terminal.

### (Second Embodiment)

According to a second embodiment of the present invention, dynamic change signaling for a plurality of CCs is transmitted by subframes different on a time basis. By this means, the user terminal can determine DCI format 1C reported by a corresponding subframe per serving cell, and dynamically set the UL-DL configuration with a predetermined number of bit sequence (for example, three-bit sequence) included in the DCI format 1C.

In the second embodiment, when configuring a subframe to detect DCI format 1C for changing the UL-DL configuration, by RRC signaling, the eNB reports for which CC's information DCI format 1C transmitted by the subframe includes. That is, in the second embodiment, RRC signaling includes information about a CC to which dynamic change signaling of a predetermined subframe is configured.

The UE performs blind decoding on DCI format 1C masked by the eIMTA-RNTI in all subframes configured, and interprets DCI format 1C as dynamic change signaling for different CCs according to subframe numbers.

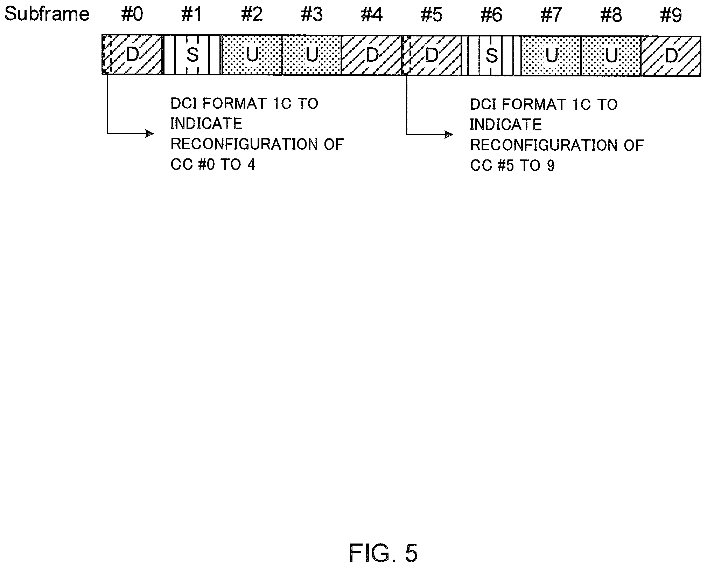

FIG. 5 is a diagram to show an example of dynamic change signaling according to the second embodiment. For example, the user terminal receives a notification that DCI format 1C in subframe #0 includes information for CC #0 to 4 and that DCI format 1C in subframe #5 includes information for CC #5 to 9 through RRC signaling. Upon receiving RRC signaling, the UE can identify DCI format 1C reported by subframe #0 as dynamic change signaling for CC #0 to 4, and also identify DCI format 1C reported by subframe #5 as dynamic change signaling for CC #5 to 9.

Note that, information about the association of subframe numbers and CCs (for example, cell index) in which the dynamic change signaling is reported, may be defined in advance or may be separately reported through higher layer signaling (for example, RRC signaling). Also, when configuring subframes to detect DCI format 1C for changing the UL-DL configuration by RRC signaling, what association is employed may be reported.

As described above, according to the second embodiment, it is possible to configure the relationship between CCs and subframes without changing the configuration of conventional dynamic signaling. By this means, it is possible for the user terminal to dynamically configure the UL-DL configuration for six or more CCs without increasing the number of bits of eIMTA signaling. Also, since the subframe to report dynamic change signaling of the UL-DL configuration can be shifted, it is possible to prevent the increase in the overhead of downlink control channel in specific subframes and smooth the overhead of downlink control channel between subframes. Note that, since the user terminal performs blind decoding on DCI format 1C in all subframes, the processing load does not increase.

### (Third Embodiment)

According to a third embodiment of the present invention, dynamic change signaling for a plurality of CCs is configured to have a larger payload (a larger capacity) compared to that of dynamic change signaling in existing systems (Rel. 10 to 12) where the number of CCs configured is five or less. Dynamic change signaling with higher payload may be referred to as "Rel. 13 eIMTA signaling."

Also, DCI formats employed for Rel. 13 eIMTA signaling may be referred to as a "new DCI format," "DCI format 1E," "expanded DCI format," "large capacity DCI format," and so on.

The large capacity DCI format may have, for example, the same payload as that of DCI format 1A (28 bits), may have a length such that all 32 CCs can be subjected to dynamic TDD independently (96 bits), or may have a payload larger than 96 bits.

The same payload as DCI format 1A allows the use of common search space of the PDCCH, and therefore controlling similar to eIMTA in Rel. 12 CA is possible. Also, when a DCI format has a payload larger than 96 bits, more flexible controlling is possible. Note that, when the size of dynamic change signaling is large (for example, larger than 96 bits), a UE-specific Search Space (UE-SS) may be used for transmission instead of a common search space.

Also, Rel. 13 eIMTA signaling may be configured to be reported by an EPDCCH (Enhanced PDCCH). A large capacity format may consume a large amount of capacity of PDCCH, and therefore signaling is preferably reported by an EPDCCH in such a case.

Note that, high multi-level modulation schemes such as 16 QAM (Quadrature Amplitude Modulation), or MIMO (Multiple-Input Multiple-Output) transmission such as rank 2 or rank 4 may be employed for a large capacity DCI format. Also, the Rel. 13 eIMTA signaling may be defined as MAC control elements (Control Elements) and transmitted including a MAC header. In these methods, it becomes possible to transmit more information bit sequences compared to existing PDCCHs.

When transmission of Rel. 13 eIMTA signaling (application of a large capacity DCI format) is configured by RRC signaling, the UE attempts to perform blind decoding on Rel. 13 eIMTA signaling. Then, when the UE detects Rel. 13 eIMTA signaling, the UE changes the TDD UL-DL configuration of the specified serving cell.

When Rel. 13 eIMTA signaling is configured, the UE may be configured to perform blind decoding on Rel. 13 eIMTA signaling, while does not perform blind decoding on eIMTA signaling defined in Rel. 12 (does not monitor eIMTA signaling defined in Rel. 12). In this case, the UL-DL configurations of all serving cells are changed using Rel. 13 eIMTA signaling.

Note that, the eIMTA signaling defined in Rel. 12 refers to dynamic change signaling reported using DCI format 1C in a common search space of the PDCCH.

By doing so, it is possible to reduce the possibility of error detection of eIMTA signaling that is not actually transmitted by the user terminal. If the user terminal changes the UL-DL configuration due to error detection, large interference to neighbor base stations or neighbor user terminals occurs. By limiting the eIMTA signaling sequence that performs blind decoding to one sequence, excess detection attempt is not performed, and as a result, the possibility that causes error detection can be reduced.

Also, when Rel. 13 eIMTA signaling is configured, the UE may be configured to perform blind decoding on both Rel. 13 eIMTA signaling and eIMTA signaling defined in Rel. 12. For example, the UE can be configured to attempt detection of Rel. 12 eIMTA signaling in the common search space, and also attempt detection of Rel. 13 eIMTA signaling in the user terminal specific search space.

In this case, for serving cells that are not controlled with Rel. 12 eIMTA signaling, the UL-DL configuration can be changed using Rel. 13 eIMTA signaling. For example, it is possible to realize an operation such that, for cells including P Cells (primary cells) which are important for ensuring connectivity, control is performed by Rel. 12 eIMTA signaling that allows transmission with a higher spreading factor due to its small payload and also allows high quality transmission and reception, while for other cells, control is independently performed by Rel. 13 eIMTA signaling that has a larger payload. By this means, it possible to independently configure the UL-DL configuration while keeping low possibility that erroneously detects eIMTA signaling for cells including P Cells which are important for ensuring connectivity.

As described above, according to the third embodiment, it is possible to employ dynamic change signaling with a larger capacity compared to conventional dynamic change signaling. By this means, the user terminal can dynamically set the UL-DL configuration for six or more CCs more rapidly and flexibly.

Note that, the UE may be configured to perform blind decoding on Rel. 13 eIMTA signaling in only specific subframes. In this case, the specific subframes may be defined in advance, or may be configured by higher layer signaling (for example, RRC signaling).

Also, the UE may be configured to perform blind decoding on Rel. 13 eIMTA signaling for only specific PDCCH/EPDCCHs. Here, the specific PDCCH/EPDCCH may be PDCCH/EPDCCH reported in UE-SS, may be any EPDCCH, one of the two sets of EPDCCHs configured as an EPDCCH, or may be specific aggregation level (AL) of PDCCH/EPDCCH that performs blind decoding.

In this way, by limiting Rel. 13 eIMTA signaling blind decoding to some subframes or a control channel, it is possible to suppress the increase in UE processing load and the increase in the overhead in signaling.

### (Fourth embodiment)

According to a fourth embodiment of the present invention, the number of bits of dynamic change signaling per serving cell is reduced. By this means, it is possible to reduce the overhead for dynamic change signaling and include more pieces of serving cell information in dynamic change signaling.

For example, the UL/DL subframe configuration that can be configured in dynamic TDD is limited (restricted) by higher layer signaling (for example, RRC signaling). By this means, the bit size of dynamic change signaling can be reduced from conventional three bits. For example, when the bit size of dynamic change signaling is configured to two bits, seven dynamic change signaling can be included with a maximum payload size of DCI format 1C (15 bits).

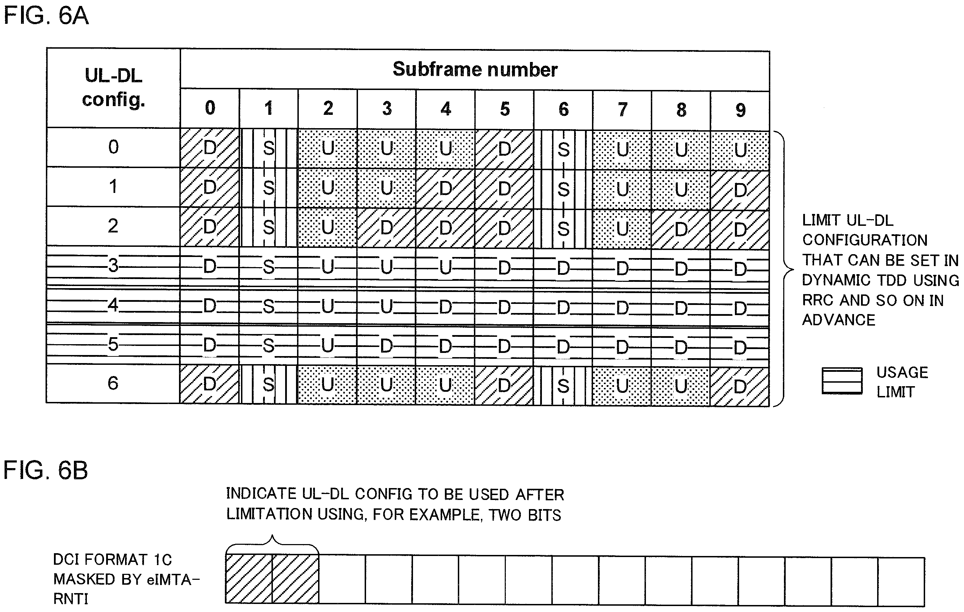

FIG. 6 is a diagram to show an example of limited UL-DL configuration and DCI format 1C according to the fourth embodiment. FIG. 6A shows an example of limited UL-DL configuration. In FIG. 6A, the UL-DL configurations that can be configured in dynamic TDD are limited by RRC signaling in advance. In FIG. 6A, UL-DL configurations 0, 1, 2 and 6 are configured to be available (UL-DL configurations 3, 4 and 5 are configured to be unavailable), and the available UL-DL configurations can be represented by two bits instead of three bits. Note that, the combination of limited UL-DL configurations is not limited to the example in FIG. 6A.

FIG. 6B is a diagram to show an example of DCI format 1C masked by eIMTA-RNTI in the case of employing the limited UL-DL configuration as shown in FIG. 6A. In this case, the UL-DL configuration after DCI limitation that is used in predetermined serving cells is indicated by two bits, for example.

As described above, according to the fourth embodiment, DCI formats can include more dynamic change signaling than that of the conventional system (Rel. 12). By this means, it becomes possible for the user terminal to dynamically set the UL-DL configuration for six or more CCs without increasing the number of bits of eIMTA signaling. Also, the blind decoding operation performed by the user terminal is similar to detection operation of dynamic change signaling in the conventional system (Rel. 12). Accordingly, it is possible to dynamically set the UL-DL configuration for more cells with the same processing load as the conventional processing load.

### (Fifth Embodiment)

According to a fifth embodiment of the present invention, RRC signaling that groups a plurality of CCs configured in eIMTA is employed. By this means, it is possible to change the UL-DL configuration for a plurality of CCs by one dynamic change signaling.

When dynamic change signaling is reported for specific CCs after signaling that groups a plurality of CCs is reported, the UE changes the UL-DL configuration for CCs belonging to the same group as the CC using the same dynamic change signaling. For example, when information that configures cells #0, #5 and #6 as one group is reported as RRC signaling that groups a plurality of CCs, dynamic change signaling for cell #0 is applied to cell #5 and cell #6.

Note that, as information for grouping a plurality of CCs, for example, information that a plurality of CCs belong to the same cell group (CG) may be reported, information that a plurality of CCs belong to the same timing advance group (TAG) may be reported, or information about other groups may be reported.

As described above, according to the fifth embodiment, a plurality of CCs configured in eIMTA can be grouped without changing the conventional dynamic change signaling configuration. By this means, the user terminal can dynamically configure the UL-DL configuration for six or more CCs without increasing the number of bits of eIMTA signaling.

### (Variation)

The UE may report to the radio base station (network), that the UE supports dynamic change of the UL/DL configuration for six or more CCs as in the above-described embodiments. For example, the UE can report to the radio base station, as its capability information (capability), that the UE supports eIMTA of six or more CCs.

Also, the UE may report to a network as its capability information, information about the number of eIMTA-RNTIs that can be detected in one subframe (for example, total number, maximum number). Also, the UE may report to the network, as its capability information, information about the number of cells to which dynamic TDD can be applied independently (for example, total number, maximum number). Also, the UE may report to the network, as its capability information, information about the frequency band to which dynamic TDD can be applied individually.

By doing so, the radio base station can learn in advance what dynamic TDD control capability the user terminal has. By controlling and scheduling dynamic TDD based on this information, dynamic TDD control or allocation that exceeds the user capability can be avoided.

Also, each embodiment may be applied in combination. For example, by combining the first embodiment and the second embodiment, dynamic change signaling corresponding to a plurality of eIMTA-RNTIs may be transmitted by shifting subframes. Also, the fourth embodiment or the fifth embodiment may be used in combination with another embodiment to reduce the amount of information of dynamic change signaling.

### (Radio Communication System)

Now, the structure of the radio communication system according to an embodiment of the present invention will be described below. In this radio communication system, the radio communication methods according to the above-described embodiments of the present invention are employed. Note that the radio communication methods of the above-described embodiment may be applied individually or may be applied in combination.

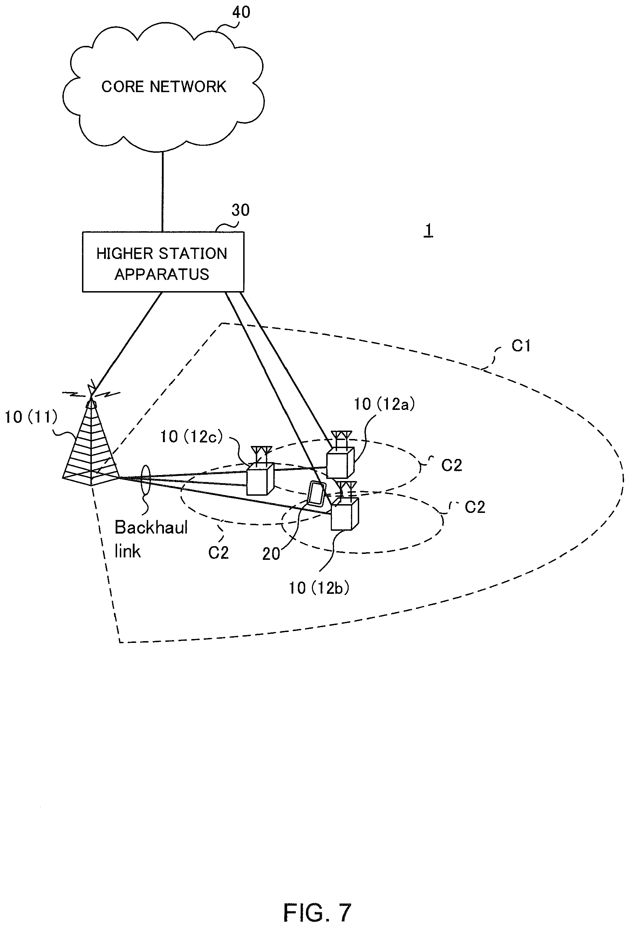

FIG. 7 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Also, the radio communication system 1 has a radio base station (for example, an LTE-U base station) that is capable of using unlicensed bands. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 7 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using at least six or more CCs (cells).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these. A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. Also, it is preferable to configure radio base stations 10 that use the same unlicensed band on a shared basis to be synchronized in time.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles for establishing connections with cells are communicated.

### <Radio base station>

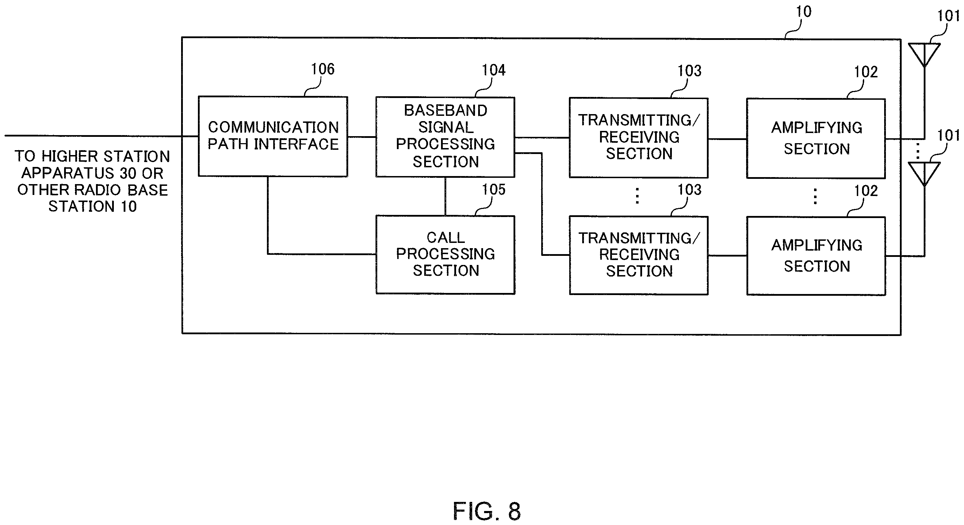

FIG. 8 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

Note that, the transmitting/receiving sections 103 transmit, to the user terminal 20, predetermined higher layer signaling generated by the transmission signal generating section 30 described later and downlink control signals including information about the change of UL-DL configuration (PDCCHs and/or EPDCCHs).

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

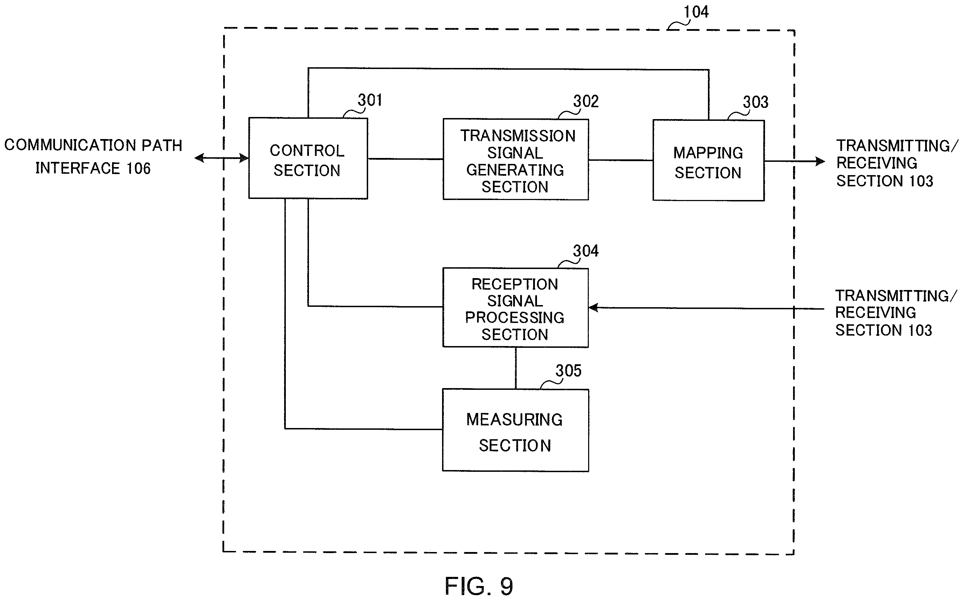

FIG. 9 is a diagram to show an example of a functional structure of a radio base station according to the present embodiment. Note that, although FIG. 9 primarily shows functional blocks that pertain to characteristic parts of the present embodiment, the radio base station 10 has other functional blocks that are necessary for radio communication as well. As shown in FIG. 12, the baseband signal processing section 104 has a control section (scheduler) 301, a transmission signal generating section 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of synchronization signals, and downlink reference signals such as CRSs (Cell-specific Reference Signals), CSI-RSs (Channel State Information Reference Signals), DM-RSs (Demodulation Reference Signals) and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

Further, the control section 301 controls the UL-DL configuration of the user terminal 20 that can communicate using six or more CCs. To be more specific, the control section 301 controls the transmission signal generating section 302 and the mapping section 303 so as to transmit predetermined higher layer signaling and downlink control signals including information about the change of UL-DL configuration (PDCCHs and/or EPDCCHs) to the user terminal 20.

The control section 301 controls to generate RRC signaling as the predetermined higher layer signaling, for example. The RRC signaling may include an identifier for detecting dynamic change signaling (eIMTA-RNTI)(first embodiment). Also, the RRC signaling may include information about a CC to be configured by dynamic change signaling transmitted in a predetermined subframe (the relationship between CC and subframe) (second embodiment).

Also, the RRC signaling may include information that reports dynamic change signaling using signals with a larger capacity format compared to the format used for dynamic change signaling in existing systems (Rel. 12) (third embodiment). Here, the "information" may be information about whether or not to report, or information used for reception of large capacity format signals (for example, payload length of large capacity format, modulation scheme, coding scheme, and so on).

Also, the RRC signaling may include limited UL-DL configurations (fourth embodiment). Also, the RRC signaling may include information to group a plurality of CCs to be configured in eIMTA (fifth embodiment).

The control section 301 may control so that eIMTA signaling defined in Rel. 12 is reported as a downlink control signal including information about the change of UL-DL configuration. That is, the control section 301 may control to report dynamic change signaling using DCI format 1C in the common search space of the PDCCH.

Also, the control section 301 may control to report eIMTA signaling newly defined in Rel. 13 or later versions as a downlink control signal including information about the change of UL-DL configuration. For example, the control section 301 may control to report dynamic change signaling using a format with a larger payload compared to dynamic change signaling in existing systems (Rel. 10 to 12) where the number of CCs is five or less.

The transmission signal generating section 302 generates DL signals based on commands from the control section 301 and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI: Channel State Information) reported from each user terminal.

Also, as described above, the transmission signal generating section 302 generates predetermined higher layer signaling and downlink control signals including information about the change of UL-DL configuration.

The mapping section 303 maps the downlink signals generated in the transmission signal generating section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, and so on). For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

Also, by using the received signals, the received signal processing section 304 may measure the received power (for example, RSRP (Reference Signal Received Power)), the received quality (for example, RSRQ (Reference Signal Received Quality)), channel states and so on. The measurement results may be output to the control section 301.

### <User terminal>

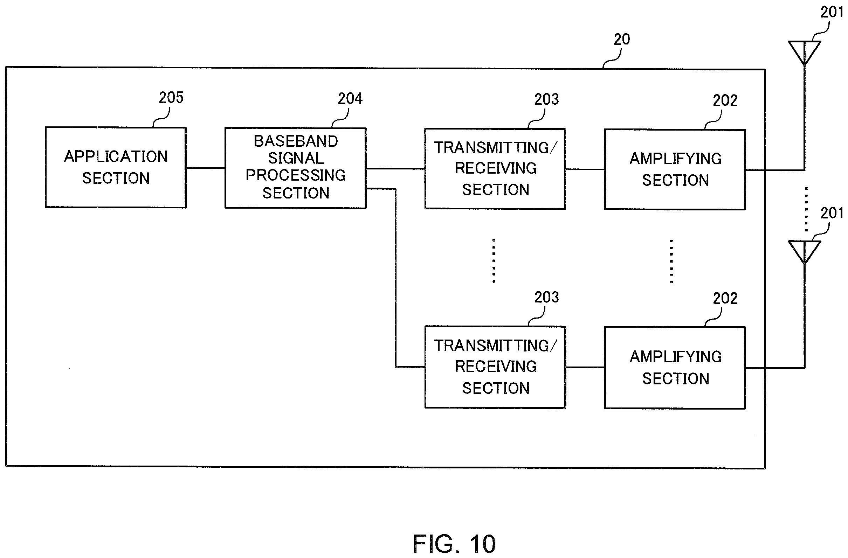

FIG. 10 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

A radio frequency signal that is received in the transmitting/receiving antenna 201 is amplified in the amplifying section 202. The transmitting/receiving section 203 receives the downlink signal amplified in the amplifying section 202. The received signal is subjected to frequency conversion and converted into the baseband signal in the transmitting/receiving section 203, and output to the baseband signal processing section 204. The transmitting/receiving section 203 can be constituted by a transmitters/receiver, a transmitting/receiving circuit or a transmitting/receiving device that can be described based on common understanding of the technical field to which the present invention pertains. Note that the transmitting/receiving section 203 may be structured as a transmitting/receiving section in one entity, or may be constituted by a transmitting section and a receiving section.

The transmitting/receiving section 203 receives the above-described predetermined higher layer signaling and downlink control signals including information about the change of UL-DL configuration.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

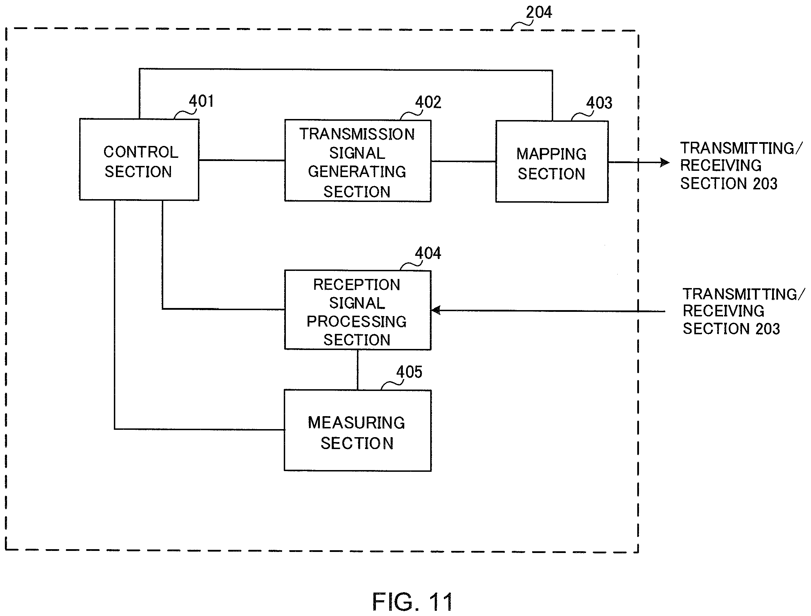

FIG. 11 is a diagram to show an example of a functional structure of a user terminal according to the present embodiment. Note that, although FIG. 11 primarily shows functional blocks that pertain to characteristic parts of the present embodiment, the user terminal 20 has other functional blocks that are necessary for radio communication as well. As shown in FIG. 11, the baseband signal processing section 204 provided in the user terminal 20 has a control section 401, a transmission signal generating section 402, a mapping section 403, a received signal processing section 404 and a measurement section 405.

The control section 401 controls the whole of the user terminal 20. For the control section 401, a controller, a control circuit or a control device that can be described based on common understanding of the technical field to which the present invention pertains can be used.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

Also, the control section 401 sets, resets, or updates the UL-DL configuration for six or more CCs to be configured as a serving cell. To be more specific, the control section 401 sets the UL-DL configuration for a predetermined CC, based on predetermined higher layer signaling and downlink control signals (PDCCHs and/or EPDCCHs) including information about the change of UL-DL configuration, which are received in the receiving section 203, and then decoded in the received signal processing section 404 (first to fifth embodiments). Note that, the number of CCs configured as a serving cell are six or more and, for example, may be 16, 32 or more.

The control section 401 can control the receiving process in the received signal processing section 404 based on predetermined higher layer signaling. For example, when higher layer signaling includes information that dynamic change signaling is reported using signals with a large capacity format, the control section 401 may control the received signal processing section 404 to blind decode Rel. 13 eIMTA signaling (signals with a large capacity format), or to blind decode both Rel. 13 eIMTA signaling and Rel. 12 eIMTA signaling.

The transmission signal generating section 402 generates UL signals based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving section 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-015164, filed on January 29, 2015, including the specification, drawings and abstract, is incorporated herein by reference in its entirety.

## Claims

1. A user terminal that can communicate by using six or more component carriers (CCs), the user terminal comprising:
a receiving section that receives predetermined higher layer signaling and a downlink control signal including information about change of UL-DL configuration; and
a control section that sets a UL-DL configuration of CC using the information about the change of UL-DL configuration,
wherein the control section determines a CC to be configured using the information about the change of UL-DL configuration among the six or more CCs based on the predetermined higher layer signaling.

2. The user terminal according to claim 1, wherein the predetermined higher layer signaling includes a plurality of identifiers to detect the downlink control signal.

3. The user terminal according to claim 1, wherein the predetermined higher layer signaling includes information about a CC to be configured by the downlink control signal transmitted in a predetermined subframe.

4. The user terminal according to claim 1, wherein the predetermined higher layer signaling includes information that the downlink control signal is reported using a format with a larger capacity compared to downlink control information (DCI) format 1C.

5. The user terminal according to claim 4, wherein the receiving section does not decode a downlink control signal reported using the DCI format 1C.

6. The user terminal according to claim 4, wherein the receiving section decodes a downlink control signal reported using the format with a large capacity and a downlink control signal reported using the DCI format 1C.

7. The user terminal according to claim 1, wherein the predetermined higher layer signaling includes information to limit a UL-DL configuration that can be set.

8. The user terminal according to claim 1, wherein the predetermined higher layer signaling includes information to group a plurality of CCs.

9. A radio base station that can communicate with a user terminal that uses six or more component carriers (CCs), the radio base station comprising:
a control section that control a UL-DL configuration of the user terminal; and
a transmission section that transmits predetermined higher layer signaling and a downlink control signal including information about change of the UL-DL configuration,
wherein in the user terminal, the predetermined higher layer signaling is used to determine a CC to be configured using the information about the change of UL-DL configuration among six or more CCs in the user terminal.

10. A radio communication method in a user terminal that can communicate by using six or more component carriers (CCs), the radio communication method comprising the steps of:
receiving predetermined higher layer signaling and a downlink control signal including information about change of UL-DL configuration; and
setting a UL-DL configuration of the CC using the information about the change of UL-DL configuration,
wherein a CC to be configured using the information about the change of UL-DL configuration is determined among the six or more CCs based on the predetermined higher layer signaling.
